# EUROPEAN PATENT APPLICATION

(11) **EP 1 038 446 A1**
(43) Date of publication of application: **27.09.2000**
(21) Application number: 99200916.7
(22) Date of filing: 24.03.1999
(51) Int. Cl.: A23K 1/16, A23K 1/14

(54) **Increasing plasma calcitriol levels**

(71) Applicant: Stichting Dienst Landbouwkundig Onderzoek, 8219 PH Lelystad (NL)
(72) Inventor: The designation of the inventor has not yet been filed
(74) Representative: Ottevangers, Sietse Ulbe

(57) **Abstract**

The invention relates to animal food and supplements used therein. The invention provides a method for preparing an animal food suitable for increasing immune competence and/or phytate degradation competence of said animal comprising supplementing or enriching said food with a substance capable of increasing plasma calcitriol levels. Use of such a method as provided by the invention is particularly useful for reducing or abolishing dietary antibiotic intake by a food animal. For example, broilers or fattening pigs, but also reproductive or egg laying animals, can be reared and kept under circumstances of high intrinsic immune competence, without having to resort to the excessive or forbidden dietary use of antibiotics or other "growth additives" that seems to be common place in traditional animal husbandry.

## Description

The invention relates to animal food and supplements used therein.

In general, animal foods, such as composed feed (diets) for birds, fish and mammals, are composed from vegetable and/or animal sources to meet the requirements of these animals for essential nutrients and energy. For production (growth, eggs and milk) and maintenance (energy) animals require protein, carbohydrates, fats, minerals, and vitamins. According to the known dietary requirements of various animals different feed materials are mixed to compose complete diets which in general contain well known required nutrients and energy levels in a correct ratio.

In present animal husbandry, often selected strains of animals, such as ruminants, pigs, poultry and fish are used that are characterised by a high production level. Such modern strains are often obtained by genetic selection and require specific feed management. However, by genetically selecting animals for desired production traits, other traits of the animal, such as those relating to immune competence, have in general been neglected. All too often, these high producing animals are over-sensitive to disease caused by infections with micro-organisms such as bacteria because of a in general scant development of the animal's immune competence in relation to for example its fast growth rates or increased production of eggs or milk.

To accommodate for the in general low levels of immune competence observed in these selected animal strains, one often supplements animal food with compounds such as antibiotics, often euphemistically called "growth-additives". The preventive use of antibiotics in animal food is considered by many to be indispensable to avoid illness and death, low-production and economic loss.

However, adding antibiotics to animal food is now more and more considered to be very undesirable from the animal- and human-health perspective, firstly because of fears of the development of bacterial strains that have become resistant against the antibiotics used, secondly because of fears for the presence of residues of the dietary antibiotics used in products from food animals, such as meat, milk and eggs. Consequently, more and more consumers desire animal products that are residue free and are derived from animals fed no antibiotics.

Due to this consumer pressure, legislation relating to antibiotics use in animal food is now rapidly changing, for example, within five years from now the preventive use of antibiotics added to diets will likely be restricted or banned in EC countries. Especially the routine use of dietary antibiotics in foods for food animals (those animals producing goods for human consumption such as meat, eggs or milk) will be reduced or even abolished in the near future.

Therefor, alternative, and preferably natural, food products need be found to replace dietary antibiotics in animal food to guard health status and welfare of animals and prevent otherwise unavoidable losses in animal husbandry.

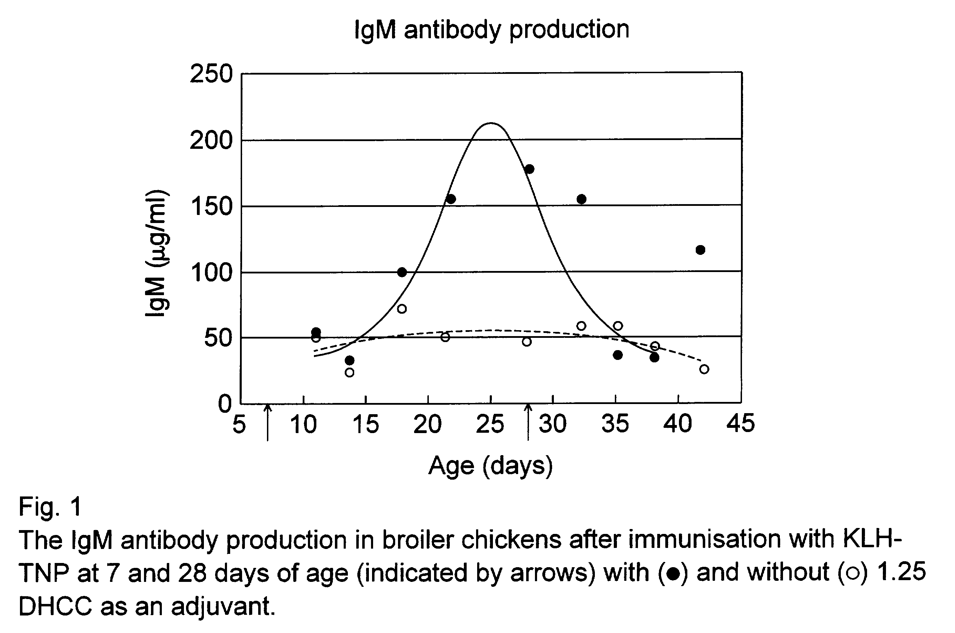

The invention provides a method for increasing immune competence of an animal by inducing calcitriol synthesis by said animal, for example by supplementing or enriching said animal's food with a substance capable of increasing plasma calcitriol levels. Naturally, calcitriol synthesis can also be increased by supplementing said animal's water with said substance, or by providing said substance orally, rectally or parenterally to said animal. Surprisingly it was found that by providing an animal with a food or substance that is capable to increase plasma calcitriol (or analogues or derivatives thereof) levels of said animal, it is possible to increase the immune competence of said animal (see for example figure 1).

Elevating calcitriol (1,25 dihydroxy-cholecalciferol, DHCC, 1.25(OH)₂D₃) levels increase competence of the immune system in several ways. It, or its analogues or derivatives, stimulates phagocytic and antigen presenting activity, and thereby promotes initial immune responses. This involves among others activation of T-cells via antigen presentation, cytokine secretion and stimulation of specific antibody production by B-cells. These stimulatory effects are balanced by the ability of the hormone to inhibit T-cell proliferation, which is needed for the necessary feedback mechanisms regulating immune responses.

According to the invention it is possible to raise calcitriol plasma levels by dietary calcitriol supplementation, or by the addition of dietary supplements with precursors or analogues thereof, however, in a preferred embodiment, the invention provides a method for preparing an animal food suitable for increasing immune competence of said animal comprising supplementing or enriching said food with a substance capable of increasing plasma calcitriol levels wherein said substance or derivatives thereof induces calcitriol synthesis in said animal, thereby increasing calcitriol levels. Supplementing a food can for example be done by the addition of a fraction (such as the remains of soy when most fat and proteins have been removed) that is specifically rich in said substance that induces calcitriol synthesis in said animal, enrichment of a food in general occurs by depleting a food from a compound or substance, such as from fat or protein, that has not that inducing activity. Of course, enriched fractions can later be supplemented.

In a preferred embodiment a method according to the invention is provided wherein said inducing substance comprises a phyto-estrogen. Phyto-estrogens are estrogen-like compounds from plants, such as legumes and grains, with estrogenic activity. Phyto-estrogens are often divided into three classes: isoflavones, lignans and coumestrol. Especially soybeans contain high levels of isoflavones, of which the most abundant are genistein (C15H10O5) and daidzein (C15H10O4). Most isoflavones in plants are bound to sugars as glycosides (genistin and daidzin respectively). Grains and legumes are important sources of lignans, while coumestrol (C15H10O5) generally is found in clover, alfalfa and peas. The relative activity of different phyto-estrogens can for example be found in Mayr et al, Toxicology 74:135-149; 1992. The content of phyto-estrogens in plants can vary considerably, for example the content of daidzein and genistein in soy depends upon breed, growing conditions, and year of harvest. In general the content of plasma calcitriol elevating compounds in whole plants, or even whole seeds, is too low, to raise plasma calcitriol levels sufficiently, and feeding enriched fractions or food supplemented with the desired compound would be desirable. Although phyto-estrogens are fat-soluble plant components, it is not likely that they are strictly localised in the fat fraction of the leguminous seeds. In plants isoflavones are bound to sugars (carbohydrate fraction) and we have observed that fat containing plant fractions, such as full fat soybeans, as well as fat-depleted plant fractions, such as solvent extracted soybean meal stimulate calcitriol levels in plasma.

In a preferred embodiment, a method according to the invention is provided wherein said substance is derived from a seed, preferably from a leguminous seed such as for example soy. It is provided herein for example that (fractionated) substances from leguminous seeds, such as soy beans, increase immune competence by increasing the levels of calcitriol in plasma of broiler chicks. Leguminous seeds themselves can be used as supplement in animal feed, however, due to the low concentration of bioactive compounds in these seeds, adding a bulk amount of leguminous seeds to animal feed would in general disturb the desired constitution of animal feed. Therefore, it is preferred to supplement animal food with a substance derived from specific fractions of plants, such as leguminous seeds, with high concentrations of plasma calcitriol level increasing substance, comprising for example isoflavones, coumestans and resorclic acid lactones, which stimulates the synthesis of calcitriol by the animal (see for example table 1).

Fractionation of plants or plant parts, such as fractionation of grains or seeds is well known in the art. Preparing fractions enriched in phyto-estrogenic activity is for example done by milling or preparing solvent-extractions, determining the phyto-estrogenic activity of the various fractions with a method known in the art, and selecting the desired fraction. Several publications (i.e. Reinli, K. and Block, G., Nutr. Cancer 26:123-148; 1996) inform about the phyto-estrogen content in foods and fractions derived thereof.

The invention further provides a method according to the invention whereby also phytate degradation capacity of said animal is increased. It is nowadays, mainly for environmental reasons, preferred that manure derived from animals contains as little minerals as possible. In this respect, phosphate is seen by many as a mineral which presence in manure should be reduced. However, animal food, especially of plant origin, contains a fair and sometimes large amount of bound phosphate, i.e phytates such as inositol phosphate (IP-6), that is not or only little degradable to the animal, and thus leaves the digestive tract relative undigested, thereby polluting the environment. Animals of various origin are more-or-less capable of degrading phytate phosphorus, and often to animal food phytases are added to help degradation. However, said phyatases are generally of recombinant nature, being enzymes derived from recombinant micro-organisms. It has even been suggested to provide transgenic or recombinant plants for incorporation in animal food, said transgenic plants having been provided with a recombinant phytase that enables better phytate degradation. However, as much as general consumers are these days wary of dietary antibiotic use, wariness exists related to use of recombinat products, thereby creating a market for so-called "natural" products.

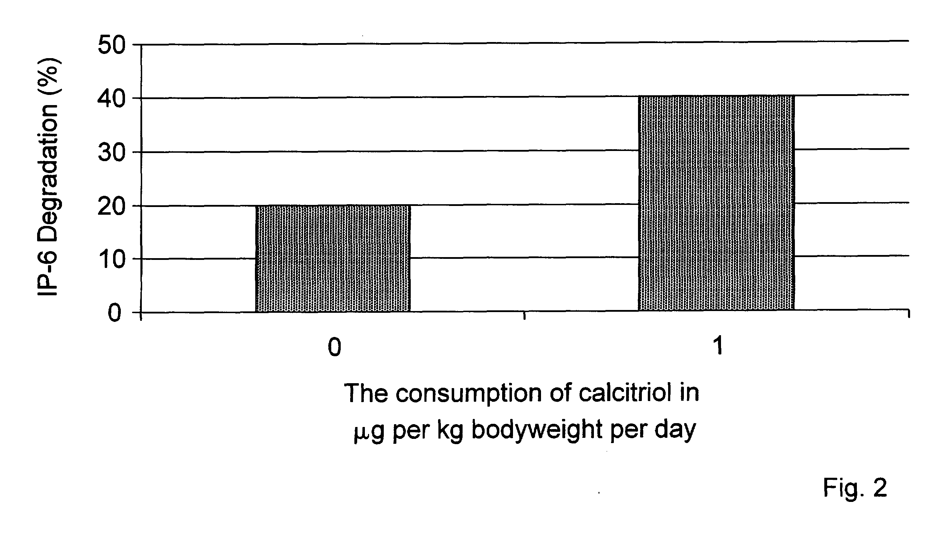

It has also been observed that calcitriol can be helpful in degrading phyates, for example, Edwards (J. Nutr. 123:567-577, 1993) demonstrated that the degradation of IP-6 in broilers could be improved by dietary supplementation with calcitriol. As for example can be seen from figure 2 and table 2, the invention provides a method to increase phytate degradation, thereby reducing phosphate content of manure.

The invention also provides use of a dietary substance capable of increasing plasma calcitriol levels for the preparation of a supplement for an animal food suitable for increasing immune competence and/or phytate degradation of said animal. Said animal can be selected from the group of birds, fish and mammals, such as humans and ruminants who also will benefit from increased immune competence.

However, in a preferred embodiment, the invention provides use of said dietary substance for the preparation of poultry food or pig food. Poultry and pig husbandry is most under siege for both its dietary antibiotic use and its manure production, notably because with these animals genetic selection for production traits has taken great strides, thereby compromising other traits such as immune competence or phytate degradation. It is of course preferred when said substance is capable of inducing calcitriol synthesis.

The invention also provides a dietary substance or supplement for an animal food suitable for increasing immune competence of said animal comprising a substance capable of increasing plasma calcitriol levels, preferably wherein said substance is capable of inducing calcitriol synthesis. In a preferred embodiment, said substance comprises a phyto-estrogen, such as for example can be found in isolated fractions of grains and leguminous seeds, preferably soy.

The invention also provides an animal food comprising a supplement according to the invention or otherwise enriched for a substance capable of increasing plasma calcitriol levels or inducing calcitriol synthesis. Such a food is suitable feed for all animals where raising immune competence is desired but is particularly preferred for poultry or pigs.

The invention also provides a method for increasing immune competence and/or phytate degradation capacity of an animal comprising feeding said animal a food comprising a supplement according to the invention or otherwise enriched for a substance capable of increasing plasma calcitriol levels or inducing calcitriol synthesis, preferably wherein said animal is selected from the group consisting of poultry or pigs. Use of such a method as provided by the invention is particularly useful for reducing or abolishing dietary antibiotic intake by a food animal or for reducing pospahte content of manure. For example, broilers or fattening pigs, but also reproductive, milk producing or egg laying animals, can be reared and kept under circumstances of high intrinsic immune competence, without having to resort to the excessive (or in the future even forbidden) dietary use of antibiotics or other "growth additives" that seems to be common place in traditional animal husbandry.

The invention also provides an animal having been fed a food according to the invention, preferably to partly or fully replace food supplemented with dietary antibiotics or to avoid eating recombinant products. In a preferred embodiment, the invention provides an animal which has been exclusively, or at least mainly been fed a food as provided by the invention, at least in its productive phase, such as in its fattening period or egg laying or milk producing phase in its life. Such an animal has been fed more "naturally" than under the common circumstances of high dietary antibiotics use, and can have been kept away from eating "non-natural", recombinant foods, and for example still have high resistance against disease and have high phytate degradation capacity.

The invention also provides an animal product, such as meat, milk or eggs, or, albeit not intended for human consumption, manure derived from an animal fed according to the invention. Said, more "natural", food products contain no, or only insignificant levels of (at least dietary) antibiotic residues, especially from avoiding the use of dietary antibiotics. The invention also provides manure derived from an animal fed according to the invention, said manure (generally containing no dietary antibiotic derivatives) is containing generally less phosphate than manure derived from animals wherein phytate degradation capacity has not been increased.

**Table 1.**

| The content of calcitriol in bloodplasma (10⁻¹² g/ml) of broiler chickens related to the consumption of different feedstuffs (g/kg body weight/day) containing different levels of isoflavones (mg/kg body weight/day) | | | |
|---|---|---|---|
| | Daily intake | | Calcitriol in bloodplasma |
| | Feedstuff | Isoflavones | |
| | g/kg body weight/day | mg/kg body weight/day | 10⁻¹² g/ml |
| Defatted soybeanmeal | 36 | 60 | 172 |
| Peas | 51 | 4 | 72 |
| Maize | 81 | 1 | 81 |

**Table 2.**

| Degradation of inositolphosphates (IP-6) on % in relation to the consumption of different feedstuffs in g/kg body weight/day containing different levels of isoflavones (mg/kg body weight/day | | | |
|---|---|---|---|
| | Daily intake | | |
| | Feedstuff | Isoflavones | Degradation of IP-6 (%) |
| | g/kg body weight/day | mg/kg body weight/day | |
| Lupines | 45 | 160 | 68,2 |
| Defatted soybeanmeal | 36 | 60 | 49,7 |
| Fullfal soybeans | 51 | 90 | 53,9 |
| Peas | 51 | 4 | 41,8 |
| Sunflowerseed meal | 35 | 1 | 38,2 |

### Figure legends.

Figure 1.
Broiler chickens were fed a diet supplemented with (●)or without (○) a solvent-extracted soy bean derived substance (defatted soy bean meal) capable of increasing plasma calcitriol levels. At days 7 and 29, chickens were immunised with KLH-TNP, and at days 11, 14, 17, 21, 29, 33, 35, 38 and 42 IgM directed against TNP was measured in ELISA.

Figure 2
Degradation of inositol phosphates (IP-6) in broiler chickens in % related to different levels of consumed calcitriol (1.25(OH)₂D₃)

## Claims

**1**. A method for increasing immune competence of an animal comprising inducing calcitriol synthesis by said animal.

**2**. A method according to claim 1 comprising feeding said animal a food capable of inducing calcitriol synthesis.

**3**. A method according to claim 2 wherein said food is supplemented or enriched with a substance capable of inducing calcitriol synthesis.

**4**. A method according to claim 3 wherein said substance comprises a phyto-estrogen.

**5**. A method according to claim 3 or 4 wherein said substance is derived from a leguminous seed.

**6**. A method according to claim 5 wherein said seed is soy.

**7**. A method according to anyone of foregoing claims whereby also phytate degradation capacity of said animal is increased.

**9**. A method for preparing an animal food suitable for increasing immune competence and/or phytate degradation capacity of said animal comprising supplementing or enriching said food with a substance capable of inducing calcitriol synthesis.

**10.** A method according to claim 9 wherein said substance comprises a phyto-estrogen.

**11**. A method according to claim 10 wherein said substance is derived from a leguminous seed.

**12.** A method according to claim 11 wherein said seed is soy.

**13**. Use of a dietary substance capable of inducing calcitriol synthesis for the preparation of a supplement for an animal food suitable for increasing immune competence and/or phytate degradation capacity of said animal.

**14**. A supplement for an animal food suitable for increasing immune competence and/or phytate degradation capacity of said animal comprising a substance capable of inducing calcitriol synthesis.

**15**. A supplement according to claim 14 wherein said substance comprises a phyto-estrogen.

**16.** An animal food comprising a supplement according to claim 14 or 15.

**17.** An animal food enriched for a substance capable of inducing calcitriol synthesis.

**18**. A food according to claim 16 or 17 for poultry or pigs.

**19.** A method for increasing immune competence and/or phytate degradation of an animal comprising feeding said animal a food according to anyone of claims 17 to 19.

**20.** Use of a method according to claim 19 for reducing or abolishing dietary antibiotic intake by a food animal.

**21**. An animal fed a food according to anyone of claims 16 to 19.

**22.** A product derived from an animal according to claim 21.
